(19) Europäisches Patentamt
European Patent Office
Office européen des brevets

(11) Veröffentlichungsnummer: **0 495 021 B1**

# (12) EUROPÄISCHE PATENTSCHRIFT

(45) Veröffentlichungstag der Patentschrift: **11.01.95**

(51) Int. Cl.⁶: **F02B 75/22**, F16F 15/26

(21) Anmeldenummer: **91910275.6**

(22) Anmeldetag: **31.05.91**

(86) Internationale Anmeldenummer:
**PCT/EP91/01013**

(87) Internationale Veröffentlichungsnummer:
**WO 92/02720 (20.02.92 92/05)**

(54) **MASSENAUSGLEICH FÜR EINE HUBKOLBENBRENNKRAFTMASCHINE.**

(30) Priorität: **01.08.90 DE 4024400**

(43) Veröffentlichungstag der Anmeldung:
**22.07.92 Patentblatt 92/30**

(45) Bekanntmachung des Hinweises auf die
Patenterteilung:
**11.01.95 Patentblatt 95/02**

(84) Benannte Vertragsstaaten:
**DE ES FR GB IT**

(56) Entgegenhaltungen:
**DE-A- 2 904 066**
**GB-A- 746 399**
**US-A- 2 182 988**
**US-A- 3 800 625**
**US-A- 4 683 849**

(73) Patentinhaber: **AUDI AG**

**D-85045 Ingolstadt (DE)**

(72) Erfinder: **KUHN, Michael**
**St.-Leonhard-Str. 19a**
**D-8074 Lippertshofen (DE)**
Erfinder: **STEMMER, Xaver**
**Hölderlinstr. 18**
**D-8077 Reichertshofen (DE)**
Erfinder: **SCHINDLER, Manfred**
**Föhrenring 37**
**D-8015 Markt Schwaben (DE)**
Erfinder: **VILSMEIER, Walter**
**Sperlingweg 1**
**D-8091 Maitenbeth (DE)**

EP 0 495 021 B1

**Beschreibung**

Die Erfindung betrifft einen Massenausgleich für eine Hubkolben-Brennkraftmaschine mit drei zueinander versetzten Zylinderreihen zu je vier Zylinder und einer gemeinsamen Kurbelwelle mit vier Hubzapfen, auf die je eine Kolben-Pleuel-Einheit einer jeden Zylinderreihe wirkt.

Hubkolben-Brennkraftmaschinen dieser Bauart sind als W-Motoren bekannt. Der bevorzugte Zylinderwinkel beträgt 60°, was eine Spreizung der außenliegenden Zylinderreihen von 120° zueinander ergibt. Soll eine derartige Brennkraftmaschine in ein Kraftfahrzeug eingebaut werden, so ergeben sich sehr beengte Bauräume, die schon bei der Konstruktion der Brennkraftmaschine beispielsweise auch beim Massenausgleich zu berücksichtigen sind. Insbesondere für den Ausgleich der Massenkräfte und -momente 2. Ordnung ergeben sich Probleme, wenn diese mittels gegensinnig mit doppelter Motordrehzahl angetriebener Ausgleichswellen ausgeglichen werden sollen.

Aufgabe der Erfindung ist es, bei einer Brennkraftmaschine der gattungsgemäßen Art einen Massenausgleich mit Ausgleichswellen vorzuschlagen, der bei baulich relativ geringem Aufwand einen zuverlässigen Ausgleich der freien Massenkräfte und -momente insbesondere der 2. Ordnung ermöglicht.

Diese Aufgabe wird erfindungsgemäß mit den kennzeichnenden Merkmalen des Patentanspruches 1 gelöst. Vorteilhafte und besonders zweckmäßige Weiterbildungen der Erfindung sind den weiteren Patentansprüchen entnehmbar.

Wie von den Erfindern erkannt wurde, können bei dem gattungsgemäßen W-Motor die freien Massenkräfte und -momente insbesondere der 2. Ordnung mit nur zwei gegensinnig und mit doppelter Motordrehzahl angetriebenen Ausgleichswellen mit entsprechend angepaßten Ausgleichsgewichten ausreichen, wenn deren Anordnung die im Patentanspruch 1 definierte Beziehung erfüllt.

Unter Berücksichtigung dieser Vorgaben ist den weiteren Patentansprüchen eine bevorzugte räumliche Anordnung entnehmbar, die sich baulich besonders günstig an der Brennkraftmaschine verwirklichen läßt. So können die räumlich relativ nahe beieinanderliegenden Ausgleichswellen über einen Riemen- oder Kettentrieb vibrations- und geräuscharm angetrieben werden. Ferner verbleibt ausreichender Bauraum für die an Brennkraftmaschinen üblichen und erforderlichen Antriebe und Aggregate, wie Nockenwellen, Lüfterantrieb, Generator, Lenkungspumpe, etc.

Ein Ausführungsbeispiel der Erfindung ist im folgenden mit weiteren Einzelheiten näher erläutert.

Die Fig. 1 - 8   zeigen nach dem Prinzip des Vektor-Additionsverfahrens die theoretischen Zusammenhänge des erfindungsgemäßen Massenausgleiches;

Fig. 9   zeigt die theoretische Anordnung der Ausgleichswellen nach der im Patentanspruch 1 definierten Beziehung; und

Fig. 10   das Zylinderkurbelgehäuse einer W12-Hubkolben-Brennkraftmaschine mit zwei an einer Seite angeordneten Ausgleichswellen.

Fig. 11   eine Anordnung der Ausgleichswellen unmittelbar im Zylinder-Kurbelgehäuse einer Brennkraftmaschine nach Fig. 10, im Schnitt gemäß Linie XI-XI der Fig. 12 und

Fig. 12   einen Längsschnitt gemäß Linie XII-XII der Fig. 11 durch die seitlich an der Zylinderseite III angeordnete Ausgleichswelle mit Lagerdeckeln.

Die längs einer Zylinderachse oszillierenden Massenkräfte $F_o$ ($\phi$) der i-ten Ordnung lassen sich durch zwei mit der Drehzahl $i \times \omega$ gegensinnig umlaufende Vektoren darstellen. Positiv und negativ umlaufende Vektoren stehen dabei spiegelbildlich zur Zylinderachse. Zu jedem Zeitpunkt ($\sphericalangle \phi = \omega t$) heben sich die Horizontalkomponenten der Vektoren auf und die Vertikalkomponenten addieren sich zu $F_o = A\omega^2 \cos(i\phi)$; für die zweite Motorordnung ist $A = \lambda m_o r$.

Bei Motoren mit mehreren Zylinderreihen werden die Summen aus den positiv und negativ umlaufenden Vektoren der anderen Zylinderreihen gebildet.

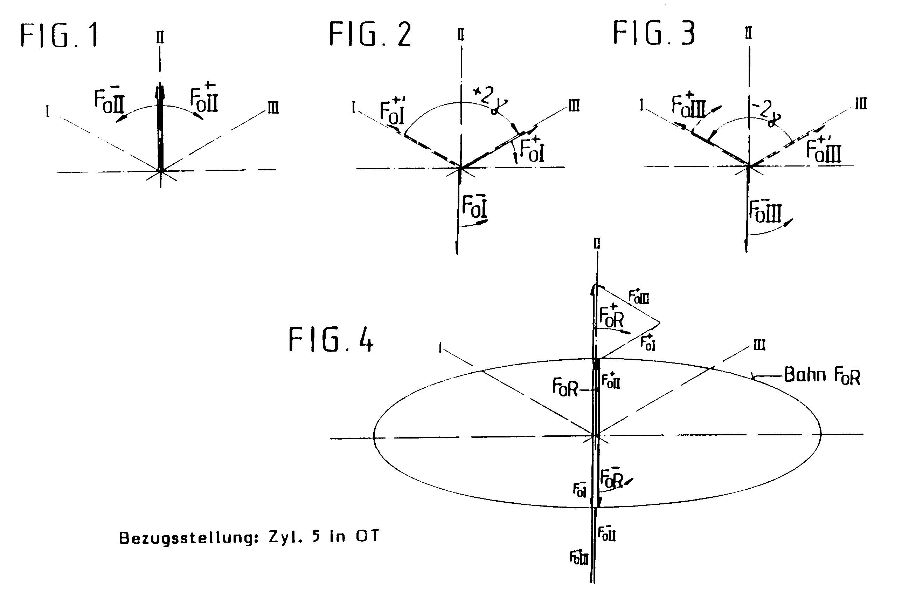

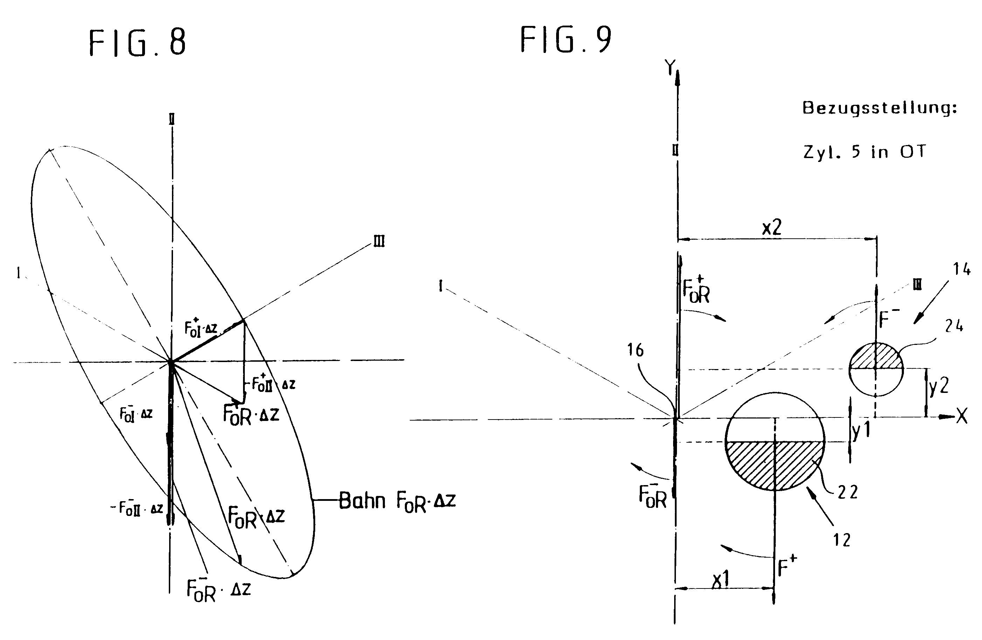

In der Fig. 1 sind die drei Zylinderreihen I,II, und III einer W12-Hubkolben-Brennkraftmaschine in strichpunktierten Linien aufgetragen, wobei eine Kurbelkröpfung entsprechend einem Vierzylinder-Reihenmotor zugrundegelegt ist (vgl. Fig. 7, Kurbelwelle 10). Als Bezugsstellung ist der erste Zylinder der Zylinderreihe II (= Zylinder fünf) in OT gewählt. Die Kröpfung der Kurbelwelle 10 steht bezüglich dieser Zylinderreihe in Strecklage, so daß die Vektoren

$$F^+_{oII} \quad \text{und} \quad F^-_{oII}$$

in Zylinderachsrichtung II zeigen. Diese Vektoren sind in Fig. 1 gezeigt.

In Fig. 2 stellt der Vektor $F^+_{oI}$ die Lage des positiv umlaufenden Vektors der Zylinderreihe I dar, wenn die Kurbelwelle 10 gedanklich in Strecklage der Reihe I wäre. Für die gewählte Bezugsstellung ist nun die Kurbelkröpfung um den Zylinderwinkel $\gamma$ von Reihe I zur Reihe II zu drehen. Für i = 2 (2. Ordnung) dreht sich damit der Vektor $F_{oI}^+$ um $2\gamma$ in Motordrehrichtung in die Position $F_{oI}^+$ . Den negativ umlaufenden Vektor $F_{oI}^-$ der Zylinderreihe I erhält man dann durch Spiegelung an der Zylinderachse I.

Fig. 3 zeigt die Ermittlung der Vektoren

$$F_{oIII}^+ \quad und \quad F_{oIII}^-.$$

In Fig. 4 sind die positiv und negativ umlaufenden Vektoren zu $F_{oR}^+$ und $F_{oR}^-$ addiert. Hier kann man erkennen, daß $F_{oR}^+$ und $F_{oR}^-$ durch zwei gegenläufige Ausgleichswellen kompensiert werden können.

Die Lage der Ausgleichswellen muß aber so gewählt werden, daß durch die Kräfte an den Ausgleichswellen keine Momente um die Kurbelwellenlängsachse entstehen. Bezugsstellung für die Vektoraufzeichnung in Fig. 4 ist wiederum der Zylinder fünf bzw. der erste Zylinder der Zylinderreihe II in OT-Stellung.

Die freie oszillierende Massenkraft für den Vier-Zylinder-Reihenmotor nach Gleichung $F_o = 4\lambda m_o r\omega^2 \cos 2\phi$, ist darstellbar durch je einen positiv bzw. negativ umlaufenden Vektor der Größe

$$F_{oI}^+ = F_{oI}^- = 2\lambda m_o r\omega^2$$

mit konstanter Winkelgeschwindigkeit $+2\omega$ bzw. $-2\omega$ ($\gamma$ = Zylinderwinkel, $\phi$ = Kurbelwinkel).

Daraus ergeben sich aufgrund der drei Zylinderreihen nach Gleichung

$$F_{oI}^+ = F_{oII}^+ = F_{oIII}^+ = F_{oI}^- = F_{oII}^- = F_{oIII}^- = positiv \quad bzw. \quad negativ$$

umlaufende Vektoren der Größe $2\lambda m_o r\omega^2$. Daraus ergibt sich $F_{oR}^+$ , $F_{oR}^-$ = resultierender Vektor positiv bzw. negativ umlaufend und $F_{oR}$ resultierender Vektor veränderlicher Größe aus $F_{oR}^+$ und $F_{oR}^-$ .

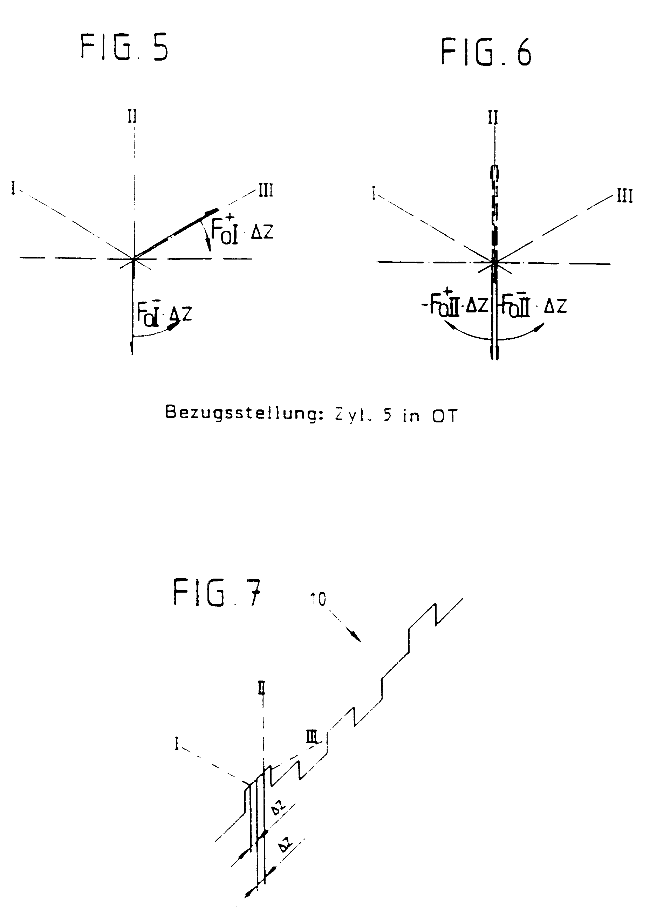

Die Fig. 5 und 6 zeigen vektoriell die freien Massenmomente 2. Ordnung aus dem Pleuelversatz, der sich daraus ergibt, daß bei der gattungsgemäßen Bauart je ein Pleuel aus den drei Zylinderreihen auf einen gemeinsamen Hubzapfen der Kurbelwelle 10 wirken. Bezugsstellung ist wiederum der Zylinder fünf in OT. Während die Zylinderreihe III aufgrund des mittigen Pleuelangriffes am Hubzapfen (vgl. Fig. 7) kein Moment ergibt, sind die resultierenden Momente aus den außermittig angreifenden Peueln in Fig. 5 und 6 aufgetragen.

Dabei sind die Benennungen analog denen bei der Herleitung der freien Massenkräfte. Bei $\Delta z$ handelt es sich um den Pleuelversatz, um den die Zylinderreihen zueinander versetzt sind (Fig. 7). $\Delta z$ ist der Hebelarm, mit dem die resultierenden Massenkräfte Momente um die x- und y-Achse erzeugen, daher sind

$$F_{oII}^+ \quad und \quad F_{oII}^-$$

mit umgekehrter Richtung angetragen (entspricht negativem Hebelarm, vgl. Fig. 6). Das resultierende Moment steht zu jedem Zeitpunkt senkrecht auf der Richtung von $F_{oR} \cdot \Delta z$.

Aus vorstehenden Überlegungen ergibt sich, daß - wie in Fig. 9 dargestellt - die freien Massenkräfte 2. Ordnung $F_{oR}^+$ und $F_{oR}^-$ durch zwei Ausgleichswellen 12,14 mit den Unwuchtkräften $F^+$ und $F^-$ direkt ausgleichbar sind. Dabei gilt:

$$F_{oR}^+ = F^+ \quad und \quad F_{oR}^- = F^- \quad .$$

Durch die Bedingung $Y_2 = -2y_1$ und $x_2 = +2x_1$ für die Lage der Ausgleichswellen 12,14 bzw. deren Drehachsenkoordinaten können die aus den Unwuchtkräften der Ausgleichwellen resultierenden Drehmomente um die Kurbelwellenlängsachse vollständig kompensiert werden. Die Bedingung ergibt sich aus dem Verhältnis der Kräfte

$$F_{OR}^{+} \ / \ F_{OR}^{-} \ = \ F^{+} \ / \ F^{-} \ = \ 2.$$

Das Massendrehmoment um die x- und y-Achse aus dem Pleuelversatz ist durch geeignete Korrekturmassen an den Ausgleichswellen vollständig ausgleichbar.

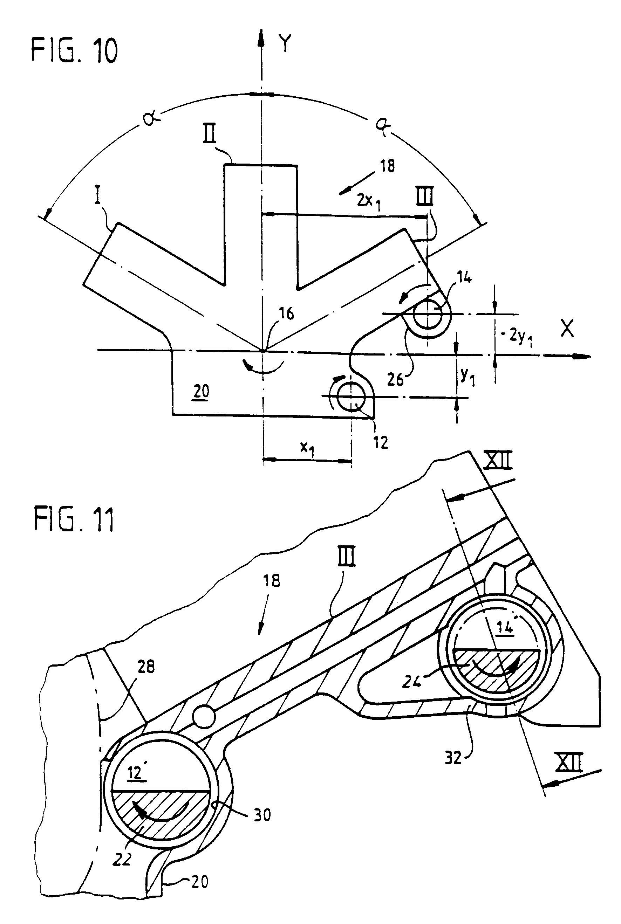

Die Fig. 10 schließlich zeigt schematisch die Stirnansicht des Zylinderkurbelgehäuses 18 der W12-Hubkolben-Brennkraftmaschine, welches sich funktionell in das Kurbelgehäuse 20 und in die Zylinderreihen I,II,III unterteilt. Die Zylinderwinkel $\alpha$ betragen jeweils 60°. Die nicht dargestellte Kurbelwelle 10 ist in bekannter Weise in dem Gehäuse 18 drehbar gelagert; die Drehachse ist mit 16 bezeichnet.

An der auf der Zeichnung rechten Längsseite der Zylinderreihe III sind im Bereich des Kurbelgehäuses 20 die erste Ausgleichswelle 12 und seitlich in Höhe der Zylinderreihe III in einem separaten Gehäuse 26 die zweite Ausgleichswelle 14 drehbar gelagert. Die Ausgleichswellen 12,14 sind in nicht dargestellter Weise über einen Zahnriementrieb mit doppelter Kurbelwellendrehzahl und in gegensinniger Drehrichtung angetrieben, wobei die Drehrichtungen durch Pfeile angezeigt sind (vgl. auch Fig. 9, auch zur Phasenlage Kurbelwelle 10 zu Ausgleichswellen 12,14). Die Ausgleichswellen 12,14 tragen in bekannter Weise Ausgleichsgewichte 22,24, wie in Fig. 9 gezeigt.

Die Anordnung der Ausgleichswellen 12,14 ist entsprechend der vorgenannten Beziehung; d. h., daß der Abstand der Ausgleichswelle 12 in X-Richtung des gestrichelt dargestellten Koordinatenkreuzes $x_1$ und der Abstand der Ausgleichswelle 14 $2x_1$ beträgt. Ferner ist der Abstand in Y-Richtung bei der Ausgleichswelle 12 $y_1$ und bei der Ausgleichswelle 14 $-2y_1$, jeweils bezogen auf die Drehachse 16 der Kurbelwelle 10.

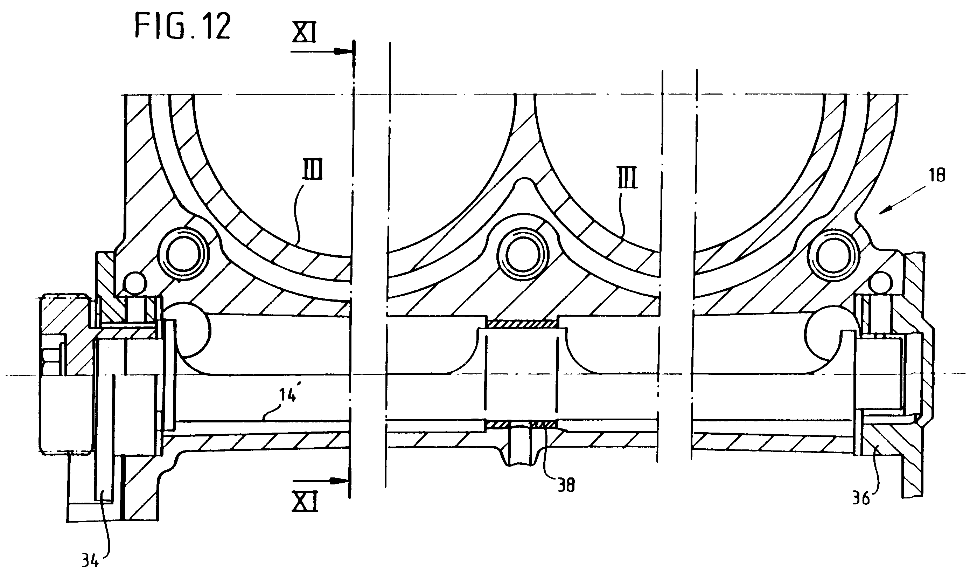

Die Figuren 11 und 12 zeigen die Anordnung der Ausgleichswellen 12', 14' unmittelbar im Zylinder-Kurbelgehäuse 18 der Brennkraftmaschine integriert. Dabei ist die Ausgleichswelle 12' (vgl. Fig. 11) nahe der durch die Pleuelbewegungen (Pleuelgeige) gegebene Hüllkurve 28 angeordnet, innerhalb eines an das Kurbelgehäuse 20 angeformten Gehäusetunnels 30.

Ein weiterer Gehäusetunnel 32 ist seitlich und am oberen Ende der Zylinderreihe III des Zylinder-Kurbelgehäuses 18 angeformt und erstreckt sich über deren gesamte Länge. Innerhalb des Gehäusetunnels 32 ist die Ausgleichswelle 14' drehbar gelagert.

Wie der Fig. 12 entnehmbar ist, ist die Ausgleichswelle 14' an ihren beiden Enden in Lagerdeckeln 34, 36 drehbar gelagert. Die Lagerdeckel 34, 36 sind in nicht dargestellter Weise mit dem Zylinder-Kurbelgehäuse 18 verschraubt. Ein weiteres Gleitlager 38 ist etwa mittig unmittelbar im Zylinder-Kurbelgehäuse 18 bzw. im Gehäusetunnel 32 vorgesehen. Über nicht näher dargestellte Schmieröl-Kanäle werden die Gleitlager der Ausgleichswellen 12', 14' mit Schmieröl versorgt.

Die Lagerung der Ausgleichswelle 12' im Kurbelgehäuse 20 ist im wesentlichen gleich der vorbeschriebenen Ausgleichswelle 14'.

Die beschriebene Anordnung der Ausgleichwellen unmittelbar in entsprechenden Wänden des Kurbelgehäuses 20 bzw. seitlich entlang der Zylinderreihe III hat den Vorteil, daß bei fertigungstechnisch relativ geringem Aufwand die vorgegebene Bedingung hinsichtlich der geometrischen Anordnung der Ausgleichswellen mit Bezug zur Kurbelwellenachse 16 gut erfüllbar ist. Die Gehäusetunnel 30, 32 können beim Gießen des Zylinder-Kurbelgehäuses 18 mit hergestellt werden, wobei die für die Ausgleichswelle erforderlichen Öffnungen durch entsprechende Kernzüge (Pinolen) geschaffen werden.

Die Erfindung ist nicht auf das gezeigte Ausführungsbeispiel bzw. auf die gezeigte Anordnung beschränkt. Beispielsweise kann es aus baulichen Gründen angezeigt sein, die Ausgleichswellen 12,14 durch Änderung des Maßes X oder Y zu verschieben; maßgeblich ist dabei die im Patentanspruch 1 angegebene Beziehung.

**Patentansprüche**

**1.** Massenausgleich für eine Hubkolben-Brennkraftmaschine mit drei Zylinderreihen zu je vier Zylinder und einer Kurbelwelle mit vier Hubzapfen, auf die je ein Pleuel einer jeden Zylinderreihe wirkt, **gekennzeichnet** durch zwei an der Brennkraftmaschine (18) gelagerte, Ausgleichsgewichte (22, 24) tragende Ausgleichswellen (12, 14), die gegensinnig mit doppelter Kurbelwellendrehzahl angetrieben sind und deren Drehachsenkoordinaten zur Kurbelwellenachse (16) im wesentlichen folgende Bedingung (Fig. 9) erfüllen:

$y_2 = -2y_1$
$x_2 = +2x_1.$

EP 0 495 021 B1

**2.** Massenausgleich nach Anspruch 1, **dadurch gekennzeichnet,** daß beide Ausgleichswellen (12, 14) an einer Seite des Zylinder-Kurbelgehäuses (18) der Brennkraftmaschine angeordnet sind.

**3.** Massenausgleich nach den Ansprüchen 1 und 2, **dadurch gekennzeichnet,** daß die eine Ausgleichswelle (12) am Kurbelgehäuse (20) und die zweite Ausgleichswelle (14) seitlich an der einen Zylinderreihe III drehbar gelagert ist.

**4.** Massenausgleich nach den Ansprüche 1 bis 3, dadurch gekennzeichnet, daß beide Ausgleichswellen (12, 14) in unmittelbar an das Zylinder-Kurbelgehäuse (18) angeformten Gehäusetunnels (30, 32) gelagert sind.

**5.** Massenausgleich nach Anspruch 4, dadurch gekennzeichnet, daß zumindest bei der am Zylindergehäuse III angeordneten Ausgleichwelle (14) an deren Enden Lagerdeckel (34, 36) vorgesehen sind, die die korrespondierenden Lagerzapfen der Ausgleichswelle (14) aufnehmen.

## Claims

**1.** Balancing of masses for a reciprocating-piston-type internal-combustion engine having three lines of cylinders, with four cylinders per line, and a crankshaft with four pins, acted upon by a respective connecting rod of each line of cylinders, characterised by two compensating shafts (12, 14) mounted on the internal-combustion engine (18) and carrying compensating weights (22, 24), said shafts being driven in opposite directions at twice the speed of the crankshaft, and the coordinates of their rotational axis satisfying essentially the following condition (Fig. 9) in relation to the crankshaft axis (16):

$$y_2 = -2y_1$$
$$x_2 = +2x_1.$$

**2.** Balancing of masses according to claim 1, characterised in that both compensating shafts (12, 14) are arranged on one side of the cylinder crankcase (18) of the internal-combustion engine.

**3.** Balancing of masses according to claims 1 and 2, characterised in that one compensating shaft (12) is mounted for rotation on the crankcase (20) and the second compensating shaft (14) laterally on cylinder line III.

**4.** Balancing of masses according to claims 1 to 3, characterised in that both compensating shafts (12, 14) are mounted in case tunnels (30, 32) formed directly onto the cylinder crankcase (18).

**5.** Balancing of masses according to claim 4, characterised in that at least in the case of the compensating shaft (14) arranged on cylinder line III there are provided at the ends thereof bearing covers (34, 36) which receive the corresponding journals of the compensating shaft (14).

## Revendications

**1.** Equilibrage des masses dans un moteur alternatif à combustion interne présentant trois lignes de cylindres à quatre cylindres chacune, et un vilebrequin à quatre manetons sur chacun desquels agissent les bielles de chaque ligne de cylindres, caractérisé par deux arbres d'équilibrage (12, 14) qui portent des contrepoids d'équilibrage (22, 24) et qui pivotent le long du moteur à combustion interne (18), entraînés en sens opposé avec une vitesse de rotation égale au double de celle du vilebrequin et dont les coordonnées des axes de rotation par rapport à l'axe du vilebrequin (16) remplissent fondamentalement la condition suivante (fig. 9) :

$$y_2 = -2y_1$$
$$x_2 = +2x_1.$$

**2.** Equilibrage des masses selon la revendication 1, caractérisé en ce que les deux arbres d'équilibrage (12, 14) sont disposés sur un côté du carter de cylindres (18) du moteur à combustion.

5

3. Equilibrage des masses selon les revendications 1 et 2, caractérisé en ce que l'un des arbres d'équilibrage (12) est monté au niveau du carter (20) et que le deuxième arbre d'équilibrage (14) est placé sur le côté le long de la ligne de cylindres III, les deux arbres pouvant tourner.

4. Equilibrage des masses selon les revendications 1 à 3, caractérisé en ce que les deux arbres d'équilibrage (12, 14) pivotent dans des enveloppes cylindriques (30, 32) moulées directement sur le carter de cylindres (18).

5. Equilibrage des masses selon la revendication 4, caractérisé en ce qu'au moins pour l'arbre d'équilibrage (14) placé le long du carter de cylindres III, des chapeaux de palier (34, 36) sont prévus à ses extrémités pour recevoir les tourillons correspondants de l'arbre d'équilibrage (14).

FIG.1

$F_{oII}^{-}$   $F_{oII}^{+}$

I   II   III

FIG.2

$F_{oI}^{+'}$   +2γ   III

I   $F_{oI}^{+}$

$F_{oI}^{-}$

FIG.3

$F_{oIII}^{+}$   -2γ   III

I   $F_{oIII}^{+'}$

$F_{oIII}^{-}$

FIG.4

II

$\vec{F_{oIII}}$

$F_{oR}^{+}$

$\vec{F_{oI}}$

I   $F_{oR}$   $F_{oII}^{+}$   III   Bahn $F_{oR}$

$F_{oI}^{-}$   $F_{oR}^{-}$

$F_{oII}^{-}$

$F_{oIII}$

Bezugsstellung: Zyl. 5 in OT

EP 0 495 021 B1

# FIG. 5

# FIG. 6

Bezugsstellung: Zyl. 5 in OT

# FIG. 7

FIG. 9

FIG. 8

FIG. 10

FIG. 11

FIG. 12